# EUROPEAN PATENT APPLICATION

(11) **EP 3 260 976 A1**
(43) Date of publication of application: **27.12.2017**
(21) Application number: 17152276.6
(22) Date of filing: 30.06.2015
(51) Int. Cl.: G06F 7/04, H04L 29/06

(54) **SYSTEM AND METHOD OF GENERATING A SECURED COMMUNICATION LAYER**

(30) Priority: 30.06.2014 US 201462018679 P
(62) Divisional of application: 15814680.3
(71) Applicant: Firmitas Cyber Solutions (Israel) Ltd., 5248703 Ramat Gan (IL)
(72) Inventor: KEINI, Gil, 4480500 Nirit (IL); SHAFT, Rami, 7620967 Rehovot (IL)
(74) Representative: Misselhorn, Hein-Martin

(57) **Abstract**

Techniques for generating a secure communication layer for a certain software application in a computer system are disclosed. The certain application is configured and operable to exchange data via a communication interface using a specific protocol implementation. A communication protocol model is generated for the specific protocol implementation based on input data about the specific communication protocol and being associated at least in part with functioning of the certain application. The generated communication protocol model is used for generating a dedicated protection layer component corresponding to the specific communication protocol, wherein the dedicated protection layer component is capable of analyzing communication traffic data associated with the certain application and validating communication traffic data addressed to the certain application and complying with the generated protocol model.

## Description

### TECHNOLOGICAL FIELD

The present invention generally relates to system security, and particularly, to a simplified architecture for construction of secure communication layer implementations.

### BACKGROUND

Computerized and automated systems/devices typically need to communicate data over a communication channel to exchange information, commands, and status and/or control data. The communication channel over which the communication is conducted (also known in computer security as an "attack surface") is an external interface of such systems that is vulnerable to malicious attacks. Such communication level attacks usually target weaknesses of the communication protocol implementation associated with the internal processing of certain type of messages.

A communication protocol is defined as a set of messages having a known structure and content, sometimes governed by a state-machine determining the correct order and timing of the exchanged protocol messages. Communication can also include transfer of files, and information streams (such as video or audio), in which case they too have structure, fields, types, predefined order and timing, etc. Thus such forms of communication of files and information streams can be considered as special cases of a communication protocol. Part of the protocol definitions can extend beyond the messages to include stream parsing rules (for finding and extracting messages from the stream).

Typically, communication between the communicating entities (devices/applications) is conducted using customary commercially available (off-the-shelf) communication protocols. Such communication protocols are vulnerable to various kinds of communication level attacks, such as injection of mal-formed messages of the communication protocols *e.g.*, using incorrect parameters in protocol messages. These communication layer attacks are now becoming a serious threat for many web/network based systems/applications, and the total vulnerability count of such web/network based systems/applications appears to be increasing annually (see, IBM, X-Force® 2013 Trend Statistics).

For example, the communication protocol sometimes receives abnormal, erroneous and\or malformed messages that can compromise proper functioning of the protocol implementation. Such abnormal/malformed messages may have unacceptable structure, content, and\or timing (*i.e.,* not complying with the protocol specification), and/or the order of forwarded messages may be erroneous, in an attempt to cause faults in the operation of the system on the receiving end. The source of the error/abnormality may be unintentional (due to hardware problem or programming errors/bugs), intentional due to sending a proprietary message (as part of a proprietary extension to the standard protocol), or malicious as an attempt to disrupt the correct operation of the protocol, sometimes with the intent of penetrating the system utilizing the protocol or otherwise to disrupt the normal operation of the said system.

For example, a problematic implementation of a communication protocol stack (the software component that handles incoming and outgoing messages) may not handle malformed messages correctly, and thus often exposes the application layer to attacks. Some problems of conventional customary communication protocol implementations are related to the programming of these protocols with bugs in program code used for validating and sanitizing incoming messages. These bugs often lead to erroneous application behavior and vulnerabilities that are exploitable by malicious opponents.

Some of the proposed solutions used nowadays to protect computer systems against such communication disruptions, such as firewalls, intrusion prevention systems (IPSs), intrusion detection systems (IDSs), and anti-viruses, provide perimeter based security aimed at identifying and neutralizing harmful communication traffic. While such solutions are effective against certain types of attacks *e.g.*, targeting customary off-the-shelf communication protocols and their known vulnerabilities, they are not so effective for protection of stand-alone devices and/or handling proprietary communication protocols and extensions.

Firewalls, IPSs/IDSs and anti-virus systems usually employ a blacklisting approach to block threats and attacks based on malicious code signatures and known behavior patterns. Firewalls are typically placed at the network boundary to monitor and filter communication sessions. Firewalls may be installed (executed) on a computer for protecting communication traffic incoming into that specific computer (*e.g.,* "personal firewall"), and may utilize deep packet inspection (DPI) capability to search for malware "signatures" within payloads carried by messages of certain standard protocols. However, firewalls are usually too generic and lack knowledge of specific/customary commercially available (and sometimes proprietary) communication protocols. Furthermore, firewalls are not used in embedded devices and non-PC (personal computer) based systems due to several reasons, among which are the need for user interaction, and high resources (storage, RAM, and CPU) requirements.

Most intrusion detection and prevention systems (IDPS) are compromised by the inability to carry out advanced inspection of communication traffic without slowing down the communication. Attempts to filter all traffic of a given communication protocol (*e.g.,* using normalisers to correctly interpret strange and possibly malicious traffic) noticeably slow down the network, which is unacceptable. Many of the customary communication protocols that are used for web/network based device/applications have too complex structures and logic which cannot be represented in tables and it is thus very difficult to protect against communication level attacks.

Fuzzing (also known as fuzz-testing) is a known method used during the testing phase of a product life-cycle, in which unexpected (mal-formed, mis-timed, and/or out-of-order) communication protocol messages are sent on purpose to the system under test (SUT). When used, this methodology becomes part of the testing stage of system development, as security and robustness oriented testing, and\or decision making criteria when evaluating the security robustness of a given product\device. While this is the right action as part of a holistic security approach, the practical difficulty with fuzzing is that fixing the problems (software or hardware bugs) may take too much time. During this time period the system remains vulnerable and exposed to attacks. Moreover, in some scenarios it is not practical to upgrade existing deployed systems, and thus the problem remains unsolved.

None of the above-mentioned solutions aims to deal with the vulnerabilities of proprietary communication protocols (and proprietary extensions to standard protocols), which thus usually remain exposed to such communication level attacks based on injection of mal-formed/abnormal messages.

Some solutions known from the patent literature are briefly described below.

US Patent No. 8,001,239 describes a web host intrusion prevention system that includes a filter engine and comparison tables populated with the set of valid commands that are to be received at a server. The filter engine looks up received commands in the comparison tables. Received commands that are not in the comparison table are rejected.

US Patent publication No. 2002/0156886 describes a protocol monitor allowing a user interface to be updated with protocol status and event information. For monitoring the behavior of a protocol contained with a network frame, network frames are received by the network device and then network frames are filtered according to which protocol is being monitored. Next, the protocol knowledge of the data structure of the network frame is retrieved by a protocol decoder. This enables the extraction of a field contained within a protocol data unit of the network frame which is needed to monitor the protocol behavior. A value is extracted from the field and represented by a keyword. This value is used to update the protocol status or protocol events on the user interface.

US Patent publication No. 2002/0186697 describes a protocol encoder and decoder. A protocol library provides the ability to allow protocols to be decoded or encoded by decoupling software code generation for decoding and encoding from specific protocols. For encoding field values into a network frame, the invention works by associating field values provided by a user with keywords. These keywords are known by a protocol library which is accessed to provide information of the data structure of the protocol data units of the network frame to be constructed. For decoding field values, network frames and the name of a protocol data unit of the network frame are received. The protocol library may be accessed with the protocol name in order to retrieve information of the data structure of the protocol data unit. The value of a field may then be associated with an appropriate keyword for use by an operator in an application.

US Patent publication No. 2002/157041 describes a protocol parser-code generator for use of a protocol definition language for allowing protocol information to be decoupled from operating systems and computer languages. For producing protocol knowledge of the structure of a protocol data unit for use in the analysis of network frame traffic, the invention works by allowing the use of a protocol definition language to define the data structure of fields in a protocol data unit in keywords. A parser associates each of the keywords describing the data structure of the fields with a corresponding table of a set of tables. Each table is linked together and has data structure fields. A code generator then generates field code for each of the tables for use in providing protocol knowledge of the data structure of each of the fields of the protocol data unit.

### GENERAL DESCRIPTION

The present disclosure pertains to protection of systems/applications against communication level attacks. Particularly, the present invention provides techniques, methods and tools, for construction of substantially secure and robust protocol enforcing components dedicated for a specific communication protocol tailored for a certain application, system or device (generally referred to herein as certain application). Simplified design tools are provided that allow an unskilled user (having no programming skills) to define protocol specification characterizing a specific communication protocol implementation tailored for the certain application (*e.g.,* video streaming, file-handling, or suchlike), system or device (turbine, printer, or suchlike), and use the protocol specification to generate a respective protocol enforcing component configured and operable to enforce policies and principles derived from the protocol specification.

The protocol enforcing component is configured and operable to monitor and validate communication traffic associated with the certain application, and in some embodiments to permit passage of communication traffic complying with the protocol specification and prevent passage of communication traffic not complying with the protocol specification. In this way the protocol enforcing component can be used to permit the specific communication protocol implementation in the certain application, to interact only with the communication traffic complying with the protocol specification defined by the user.

In some embodiments an abstract communication protocol model is generated based on the communication protocol specification as defined by the user for the specific communication protocol implementation. The abstract communication protocol model is then used to automatically generate a dedicated communication protocol enforcing component (also referred herein as smart protocol enforcer - SPE) designed to protect the specific communication protocol implementation, and the certain application at the communication layer. The dedicated communication protocol enforcing component can be installed as a protection layer in a new or existing application, and/or as an external protection layer deployed to monitor and filter all communication traffic associated with the certain application.

In possible embodiments, the abstract communication protocol model is further used to automatically generate a dedicated communication protocol implementation configured and operable to construct together with the dedicated protocol enforcing components a secure communication layer for the certain application. In this way the communication protocol model can be used to generate a secure communication layer comprising a dedicated protocol implementation tailored to serve the certain application, and a dedicated protocol enforcing component tailored to enforce the policies and principles defined by the communication protocol model on the operation of the dedicated protocol implementation.

In a broad aspect, the present invention aims to provide dedicated protection layer construction tools designed for implementing secure and robust communication protocol enforcing components for certain network entities (*e.g.,* certain network applications, systems or devices) based on a communication protocol specification defined by a user. The dedicated protection layer is configured and operable to receive all communication traffic (*e.g.,* in the form of a message-based communication, packet-based communication, stream-based communication, or file-based communication) forwarded to the certain network entity utilizing the specific communication protocol implementation, and to detect in the received communication traffic abnormal and mal-formed communication messages not complying with the protocol specification as defined by the user.

In some embodiments the dedicated protection layer is implemented by software and/or hardware, and made immediately operable for securing the specific/dedicated communication protocol implementation, and its certain network entity, upon activation thereof. The dedicated protection layer is tailored to monitor all communication traffic addressed to, and/or sent out of, the certain network entity utilizing it, and may be used to prevent interaction with messages (input data) that do not comply with definitions of the protocol specification defined by the user.

In some embodiments software tools are provided for graphically defining the specification for the specific communication protocol and generating the abstract communication protocol model. Optionally, and in some embodiments preferably, the protocol enforcing component generated for the specific communication protocol utilizes a white-listing approach to filter communication traffic not complying with the communication protocol specification defined by the user for the communication layer of the certain network entity.

For example, and without being limiting, a friendly user-interface (*e.g.,* using a wizard and/or a type of graphical application generator) can be used for setting operational definitions and/or rules for the communication protocol specification, such as, but not limited to, allowed field types, allowed message types, allowed message groups, allowed message classes, allowed message structures, allowed message order, allowed message timings, and/or allowed discrete values and range(s). The abstract communication protocol model is then generated accordingly for the specific communication protocol implementation of the certain network entity, and the dedicated communication protocol enforcing component (*e.g.,* deployed as an internal operating-system level communication driver or as a communication library component linked to the certain application software, or as an external hardware-based device acting as a gateway) is similarly generated for monitoring the communication traffic to/from the certain network entity and enforcing the operational definitions defined by the user, thereby allowing the specific protocol implementation to interact only with protocol messages complying with the user's definitions.

In this way, a communication protocol enforcing component can be tailored to any certain hardware/software network entity, according to its data/commands communication requirements, by means of the protocol specification defined for it by the user, while guaranteeing that the specific communication protocol implementation serving the certain network entity interacts only with protocol messages complying with a user's protocol definitions.

As described hereinabove, in a fuzzing process a mal-formed communication message is sent on purpose to the system-under-test with the intent of testing its behavior to unexpected communication. In this respect, the approach of the methods and techniques disclosed herein can be considered as a form of "anti-fuzzing" process, wherein a smart gating mechanism (software and/or hardware SPE) which processes the communication messages and performs descriptive-model based, intelligent, deterministic filtering and communication validation. The SPE verifies that all communication is only done according to the pre-defined communication model, rules and values. In effect, it enforces the pre-defined protocol model onto all incoming (and/or outgoing) communication. By hardening the system against unexpected communication and enforcing its behavior to adhere to the user's defined protocol model, the methods and techniques described herein neutralize any attempt to cause the system/application for which it was generated to behave in an unintended way.

In other words, the dedicated protection layer (SPE) is a validating component that has knowledge of the specific communication protocol used by the certain network entity, and is designed to monitor and filter all (incoming and outgoing) communication traffic associated with the specific network entity. In possible embodiments, only communication traffic which strictly adheres to the user's defined protocol specification (*e.g.,* described by a rule-set and/or definitions) is allowed through the dedicated protection layer. In this way there is no need to manage attack signature rules, as typically utilized nowadays in communication level attacks protection implementations.

In some possible applications the communication protocol specification is defined by a user utilizing a graphical editor. The graphical editor provides a set of graphical tools allowing a user to set protocol definitions for a specific protocol implementation. The graphical definition and visualization can be of the message(s) structure, intra-message and inter-message logical connections between fields, and other rules defining a communication protocol. The dedicated protection layer (*e.g.,* filter configuration employing a white-listing approach) can be generated after completing the protocol model constructions/generation steps, based on the protocol definitions obtained using the graphical editor.

One inventive aspect of the subject matter disclosed herein relates to a control system for use in protecting a certain software application in a computer system. The certain software application is configured and operable to exchange data via at least one communication interface. The control system comprises a data input module, for receiving user input data, input data about the certain software application and input data about a specific communication protocol used by the certain application to communicate through the communication interface, and a data processor module comprising a protocol abstraction utility configured and operable for analyzing the input data and generating data indicative of a communication protocol model associated at least in part with the specific communication protocol and functioning of the certain application, a secured communication utility being configured and operable for utilizing the communication protocol model and generating a dedicated protocol enforcing component being capable of analyzing communication traffic data passing through the at least one communication interface and validating communication traffic data addressed to the certain application and complying with the communication protocol model, while invalidating non-complying communication traffic addressed to the certain application.

In some embodiments the invalidating comprises at least one of the following operations: substantially preventing the non-complying communication traffic addressed to the certain application from reaching the specific communication protocol implementation within the certain application; recording the non-complying communication traffic addressed to the certain application; reporting the non-complying communication traffic addressed to the certain application; and replacing certain values in the non-complying communication traffic in order for it to comply with the communication protocol model.

The communication model comprises in possible embodiments at least one of the following: allowed field types, allowed message types, allowed message groups, allowed message classes, allowed message structures, allowed message order, allowed message timings, and allowed values.

Optionally, and in some embodiments preferably, the secured communication utility is configured and operable to validate the communication protocol model.

A definitions repository unit may be used in the system for storing predefined definitions associated with the specific protocol, and the user input data may accordingly comprise data about at least one of the predefined definitions from the definitions repository unit. Optionally, the predefined definitions comprise at least one of the following: permissible value types, allowed message fields, allowed message types, standard sample protocols, and template protocols.

The system comprises in some embodiments a GUI unit configured and operable to present to the user various selectable options associated with the specific communication protocol, and the input data received from the data input module may accordingly comprise at least one of the options presented to the user in the GUI unit. The various selectable options may comprise definitions for at least one of the following: possible certain devices (and their related and relevant attributes) using the specific communication protocol, data-links and network transport types for communicating via the communication interface, and possible communication protocols suitable for implementing the specific communication protocol.

Optionally, and in some embodiments preferably, the various selectable options presented by the GUI unit comprise at least one of the predefined definitions stored in the definitions repository unit.

The protected certain software application may be part of a device or system, and the protocol model may be associated at least in part with functioning of the device or system. Optionally, the dedicated protocol enforcing component is configured and operable to filter the communication traffic based on rules derived from the protocol model.

Another inventive aspect of the subject matter disclosed herein relates to a method of generating a secure communication layer for a certain software application in a computer system, the certain application being configured and operable to exchange data via a communication interface using a specific protocol implementation. The method comprises generating a communication protocol model for the specific protocol implementation, the generating being based on input data about the specific communication protocol and being associated at least in part with functioning of the certain application utilizing the communication protocol model and generating a dedicated protection layer component corresponding to the specific communication protocol, the dedicated protection layer component being capable of analyzing communication traffic data through the communication interface to validate communication traffic data addressed to the certain application and complying with the communication protocol model, while invalidating non-complying communication traffic addressed to the certain application.

Optionally, and in some embodiments preferably, the method comprises implementing the secure communication layer by hardware.

In some embodiments the input data is received using one or more of the following steps: defining types of allowed protocol messages, defining allowed message structure; defining expected values for fields in the allowed message structures; defining logical relations between at least one of fields of allowed messages and between allowed messages; defining transport layer types and settings; defining deployment of specific settings of the model; and defining output types for the secure communication layer. The defining of the deployment of the specific settings of the model may comprise at least one of the following: defining settings for logging the invalidated communication traffic; defining settings for reporting the invalidated communication traffic; defining settings for blocking the invalidated communication traffic; and defining settings for replacing certain values in the non-complying communication traffic in order for it to comply with the communication protocol model.

A yet another inventive aspect of the subject matter disclosed herein relates to a secure communication layer for a certain software application comprising a specific protocol implementation used by the certain application to exchange data, and a dedicated communication enforcing component configured and operable to monitor communication traffic associated with the certain application and validate communication traffic conforming with a communication protocol model defined by a user for the specific protocol implementation.

In possible embodiments the dedicated communication enforcing component is implemented by hardware.

Optionally, the dedicated communication enforcing component is installed in the certain software application. Alternatively, the dedicated communication enforcing component is installed external to the certain software application.

### BRIEF DESCRIPTION OF THE DRAWINGS

In order to understand the invention and to see how it may be carried out in practice, embodiments will now be described, by way of non-limiting example only, with reference to the accompanying drawings. Features shown in the drawings are meant to be illustrative of only some embodiments of the invention, unless otherwise implicitly indicated. In the drawings like reference numerals are used to indicate corresponding parts, and in which:
**Fig. 1** is a block diagram demonstrating a secure layer constructor system according to some possible embodiments;
**Fig. 2** schematically illustrates construction of secure communication layer according to some possible embodiments;
**Fig. 3** is a block diagram exemplifying a secured network communication scheme according possible embodiments; and
**Fig. 4** is a flowchart of a secure communication layer construction process according to possible embodiments.

### DETAILED DESCRIPTION OF EMBODIMENTS

One or more specific embodiments of the present disclosure will be described below with reference to the drawings, which are to be considered in all aspects as illustrative only and not restrictive in any manner. In an effort to provide a concise description of these embodiments, not all features of an actual implementation are described in the specification. Elements illustrated in the drawings are not necessarily to scale, emphasis instead being placed upon clearly illustrating the principles of the invention. This invention may be provided in other specific forms and embodiments without departing from the essential characteristics described herein.

The present invention provides a method and system for constructing a secure communication layer for a certain network application, device or system (hereinafter certain application). In general, the secure communication layer is constructed according to user defined rules/specification to secure a specific communication protocol tailored to serve the specific network application. The user defined rules/specification are used to generate an abstract communication protocol model for the specific communication protocol, that is then used for generating a dedicated protection layer configured to receive all communication traffic the protocol handles and filter out messages not complying with the user's defined rules/specification.

Accordingly, embodiments of the invention can be used to construct a protection layer for each dedicated/specific communication protocol implementation for validating all communication traffic associated with the certain application against a set of rules (white list based approach) derived from the protocol model generated for the specific protocol implementation. This approach of the present invention is particularly suitable for tailoring dedicated protocol enforcing components for monitoring communication traffic of a certain web/network based system/application (entity) and protecting it against communication layer attacks, and/or preventing penetration (unauthorized access) to the specific web/network entity.

Optionally, and in some embodiments preferably, a set of protocol rules and definitions received from the user are used to define allowable behavioral profiles for each specific communication protocol implementation. The rules and definitions provide a well defined set of operational instructions defining how the specific protocol implementation behaves and interacts with the incoming (and/or outgoing) communication traffic. In some embodiments the rules and definitions set comprises a set of pre-defined allowable messages, parsing rules, allowed message structures, expected message content, and logical relationships between message parts and between different messages.

In some embodiments, the logical relationships between messages define logical connections between fields in the same message and/or between consecutive messages. A non-limiting example can be a message having two fields, where field one is a 'token' (in the form of a text string, having a fixed length) and the second field in the same message having a value of a length of the token in number of Bytes. In this example the logical connection is between two fields in the same message, where one field depends on the value/content of the first field. A similar example can be of one message containing a field, where the value in this field determines how a following (second) message should be interpreted. Thus, depending on the value of the specific field in the first message, the second message may be interpreted in one of several different ways and thus affect the system behavior differently.

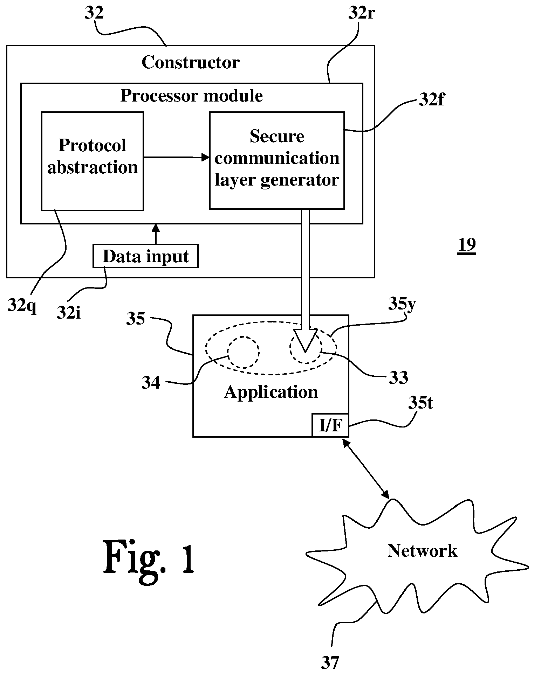

**Fig. 1** schematically illustrates construction of a secure communication scheme **19** according to some possible embodiments. A control system **32** (also referred to herein as constructor) is used in this scheme for constructing a secure communication layer **35y** tailored for a certain application/device **35.** As will be apparent from the following description, the secure communication scheme **19** is particularly useful in protecting a certain software application in a computer system, and/or a certain device/system having computing capabilities, all of which are generally referred to herein as a certain application, that is configured and operable to exchange data over one or more communication networks **37** via at least one communication interface **35t.**

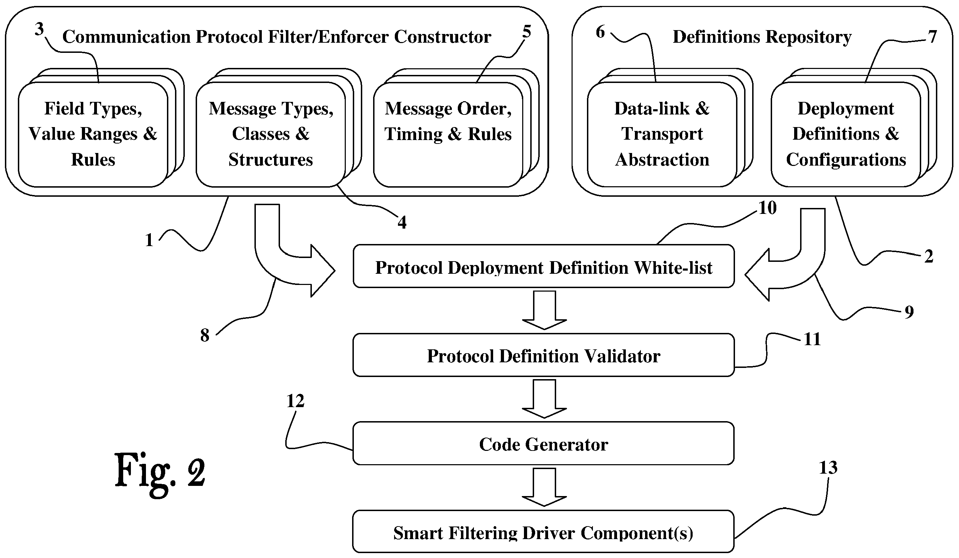

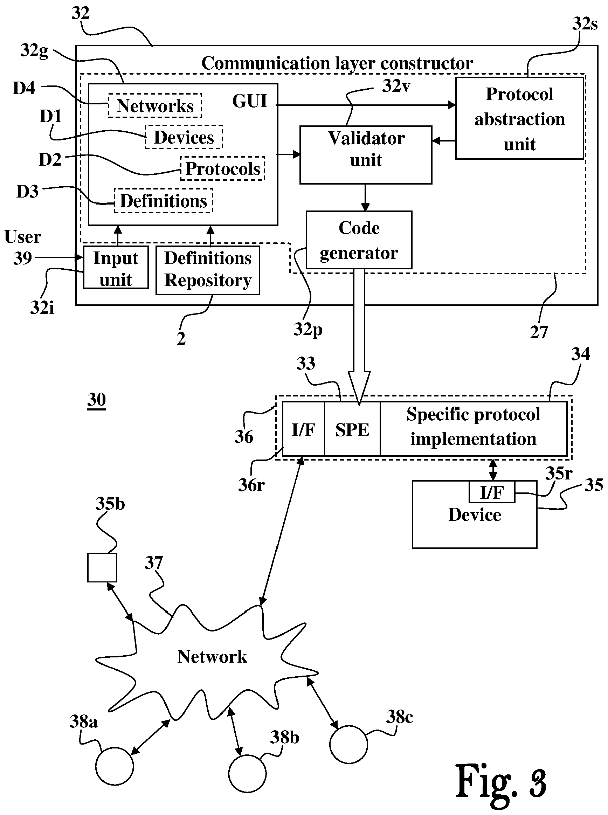

In this non-limiting example the control system **32** comprises a data input module **32i** and processor module **32r** comprising a protocol abstraction utility **32q** and a secure communication layer generator utility **32f.** The data input module **32i** is configured and operable for receiving at least one of user input data (*e.g.,* graphically and/or via a structured file) and input data about the certain (software) application **(35)** and input data about at least one specific communication protocol **(34)** used by the certain application **(35)** to communicate data over networks **37** via the communication interface **35t,** and provide the processor module **32r** with the received data. In some embodiments, at least some of the input data is obtained from pre-configured repositories based on user selection and/or settings, as exemplified hereinbelow with reference to **Figs. 2** and **3****.** The processor module **32r** is configured to process the data from the data input module **32i** and use it for generating the secured protection layer **35y.**

Particularly, in some embodiments the data received from the data input module **32i** comprises at least one of: types of messages allowed for use by the communication protocol; structure definition for each of the allowed message types; types and expected values for each field in the defined message structures; logical relations between the message fields (if needed) and between allowed messages (such as request-response pairing); allowed transport layer types and their settings; deployment specific settings (such as but not limited to, logging and reporting settings, blocking and reporting or just reporting, and suchlike); types of allowed outputs (specific computer language for code generation, software library or application, hardware description language, and suchlike).

The protocol abstraction utility **32q** is configured and operable for analyzing the data received from the data input module **32i** and generating data indicative of an abstract communication protocol model associated at least in part with functioning of the certain application **35.** In general, the protocol model is a coherent collection of definitions and rules, describing the specific communication protocol **34** and its correct usage in the context of the certain application **35.** In some embodiments the protocol model delineates messages and fields within messages, message types and content. The protocol model may further define allowable logical relations between fields within the same message, allowable logical relations between fields within different messages, allowable logical relations between messages, and/or define the parsing of communication stream to recognize and extract messages.

In some embodiments, the protocol abstraction utility **32q** is also configured and operable to validate the generated data indicative of the communication protocol model for logical consistency. For example, in some embodiments the protocol abstraction utility **32q** is configured and operable to algorithmically validate several aspects of the communication protocol model definitions/rules, to make sure it is as complete as possible, and that there exists no contradictions it its definitions.

The validated communication protocol model data can be then used as instructions to automatically generate source-code of the dedicated protection layer component **33.** The secured communication layer generator **32f** is configured and operable to utilize the communication protocol model from the protocol abstraction utility **32q,** and to generate a dedicated protection layer component **33,** dedicated for the specific communication protocol **34** of the certain application **35.**

For example, and without being limiting, in some embodiments the communication layer generator **32f** is configured and operable to automatically convert the protocol model into a standard programming language source-code (software or hardware). The produced source-code can then be compiled to produce an executable software application (or library) active in real-time to implement the dedicated protection layer, regardless of the constructor system used to generate it. The produced software application can be applied as a protection layer in a new or existing application. Alternatively, it can be deployed external to a system coupled to the communication network **37** so as to monitor and filter all communication traffic associated with the system.

The specific communication protocol **34** is adapted for data exchange between the certain application **35** and the one or more communication networks **37.** The dedicated protection layer component **33** is capable of analyzing communication traffic data in the communication network **37** that is being addressed to the certain application **35,** as received via the communication interface **35t.** In some embodiments, the dedicated protection layer component **33** selectively permits passage of communication traffic data addressed to the certain application **35** and complying with the communication protocol model generated for the specific communication protocol **34** by the communication protocol abstraction utility **32q,** while invalidating non-complying communication traffic addressed to the certain application **35.**

In some embodiments, the invalidating of non-complying communication traffic comprises substantially preventing the non-complying communication traffic addressed to the certain application **35** from reaching the specific communication protocol implementation within the certain application **34.** Alternatively or additionally, the invalidating of non-complying communication traffic comprises at least one of reporting and recoding the non-complying communication traffic addressed to the certain application **35.**

In some embodiments, after generating the secure communication layer **35y** by the processor module **32r,** it is installed in the certain application **35** and activated in order to receive and filter by its dedicated SPE **33** all communication traffic addressed to the certain device **35** from the network **37,** and process the filtered communication traffic by its specific communication protocol **34.**

In some embodiments the dedicated protection layer **35y** is configured and operable to report received protocol messages that do not strictly conform to the generated communication protocol model. In other possible embodiments the dedicated protection layer **35y** is configured and operable to block the protocol messages that do not strictly conform to the generated communication protocol model. In yet some other possible embodiments it is the user's discretion to decide whether the dedicated protection layer **35y** is to report in real-time, without blocking, the protocol messages that do not strictly conform to the generated communication protocol model. Yet, in some other possible embodiments, the dedicated protection layer **35y** (based on some pre-defined rules) may be configured and operable to replace certain values in the protocol messages that do not strictly conform to the generated communication protocol model in an attempt to "correct" the corrupted communication traffic.

It is noted that the constructor **32,** and its various parts, can be implemented by software modules and/or hardware units, according to specific implementation requirements and specifications. In some possible embodiments the constructor **32** is implemented as a computerized system comprising one or more processing units and memories for storing and executing one or more software modules used for implementing the data input utility **32i,** the processor module **32r,** and its protocol abstraction utility **32q** and secure communication layer generator **32f.**

Optionally, and in some embodiments preferably, once the communication protocol model is generated, it is used to automatically generate the software source code (software source-code used for generating software executables and binaries) used for implementing the dedicated protection layer component. In some embodiments, the dedicated protection layer component is implemented by a programmable chip device (*e.g.,* using hardware description code for programming the structure, design and operation of electronic circuits in FPGA and/or ASIC).

Having the dedicated protection layer component at hand, it may be retro-fitted to existing systems. The deployment can be done as an add-on internal software component (such as a communication driver), or as a component installed external to the device in the form of an inline hardware component running/executing the protection layer/filter-gating component. The protection layer component can then listen in on the communication exchange, and enforce policies and principles of the generated communication model *e.g.*, based on a white listing approach, by comparing the incoming communication traffic to the white-list-based communication model (content, structure, and rules), and deterministically detecting aberrations, and thereby allowing logging, reporting and filtering impermissible and unexpected messages/content. In this way, the protected certain application instantly gains a robust layer of security against attacks, tampering, misuse, and unexpected messages and/or values passed at the data communication layer.

A control system **32** suitable for use with embodiments described hereinabove may include, for example, one or more processors connected to a communication bus, one or more volatile memories (*e.g.,* random access memory - RAM) or non-volatile memories (*e.g.,* Flash memory). A secondary memory (*e.g.,* a hard disk drive, a removable storage drive, and/or removable memory chip such as an EPROM, PROM or Flash memory) may be used for storing data, computer programs or other instructions, to be loaded into the computer system.

**Fig. 2** schematically illustrates workflow of a secure communication layer construction from protocol definition to protocol enforcing component generation, according to some possible embodiments. The user of the system defines at **1** the protocol specification, which will be later analyzed for implementing the dedicated protocol enforcer/filter (SPE). The definitions obtained are used in some embodiments to define the complete communication protocol model based on white listing principles, for automatically verifying incoming messages/content. Optionally, the user inputs into the system in **1** the full protocol definition.

For example, and without being limiting, the protocol definitions may comprise the following components:
- field types, values and value-ranges, and possibly rules and relations between fields in the same message, as shown in block **3;**
- message types, groups, classes, and structures of each of the messages as shown in block **4,** which are built based on building-blocks defined in block **3;** and
- message order, timing, rules and relations between consecutive messages as presented in block **5,** which are based on the messages defined in block **4;**

The user may input into the system suitable definitions, or use the predefined definitions provided for supported communication channels and configurations in block **2,** comprising:
- parameters and abstract definitions for the data-link and transport type, as shown in block **6,** which are typically crucial for generating the software/hardware that interfaces the required communication channel; and
- deployment definitions and configurations which are independent from the protocol definition but are part of the communicating system/device to be protected, as shown in block **7.**

The above definitions are combined (indicated by numerals **8** and **9**) into specific protocol-deployment definitions, which also describe the abstract communication protocol model (based on white listing principles) of correct/permissible and expected messages shown in block **10.** In block **11** these combined definitions (defining the communication protocol model) are validated for consistency and coherency. The validated model and description is used as input into the software source-code generator block **12** which automatically creates a computer language validating/filtering component in block **13** to be deployed in the system/device to be protected.

In some embodiments the set of rules/definitions defined by the user for the protocol specification is processed automatically to produce computer language instructions implementing the dedicated protocol enforcing component (the validating SPE), which may be implemented by software or hardware, or by a combination of software and hardware. The validating SPE component is deployed in-line so that all communication traffic the specific protocol implementation needs to handle is passed through the SPE component for matching and input validation. In this way, only communication which strictly adheres to the protocol specification, as defined by the rules set generated from user inputs, are allowed to pass through the SPE component and interact with the specific protocol implementation and its certain application/network entity.

With reference to **Fig. 3****,** in some embodiments secured network communication schemes **30** are devised by means of communication layer constructor **32** (also referred to herein as constructor for brevity). The constructor **32** is a system designed to provide a user **39** with a set of user-friendly tools for constructing a smart protocol enforcer **(SPE) 33** designed to comply with particular data/instructions communication requirements of a certain device **35** (*e.g.,* printer, control-station, pump, valve, data storage, surveillance cameras, communication base station, or suchlike).

It is noted that the specific device **35** may be any type of system or software application requiring data communication capabilities. Thus, the specific device **35** is also referred to herein as a specific network entity, though it should not necessarily be a network/web based entity, but rather a specific piece of machinery/circuitry and/or software to be securely coupled to the communication network **37** *(e.g.,* TCP/IP data network), or having a communication interface over which is receives and sends commands and data. Of course, specific device **35** may as well be a web/Internet based application or machine (*e.g.,* content steaming application, web server, automated teller machine - ATM, or suchlike).

In this non-limiting example the specific device **35** includes a communication interface **(I/F) 35r** for coupling to the dedicated protection layer **36.** The dedicated protection layer **36** comprises the SPE **33** that is configured by the constructor **32** to monitor communication traffic of a specific protocol implementation **34** configured to serve the certain device **35.** The SPE **33** is generated by the constructor **32** based on a set of rules/definitions provided by the user **39.**

The dedicated protection layer **36** comprises a communication interface **36r** for connecting it to the communication network **37.** The dedicated protection layer **36** may be implemented by hardware, or software, or by a combination thereof. For example, in possible embodiments, at least the SPE **33,** or the entire dedicated protection layer **36,** is implemented by a programmable chip device (*e.g.,* FPGA, ASIC). Further, although **Fig. 3** demonstrates the dedicated protection layer **36** being external to the certain device **35,** it may alternatively be integrated inside the certain device **35.**

The SPE **33** is configured to receive and monitor all communication traffic associated with the certain device **35,** particularly the incoming communication, and transfer to the specific communication protocol **34** of the certain device **35** only messages and/or content/data that comply with the set of rules/definitions defined by the user **39** during the construction stage. In some embodiments the SPE **33** is configured and operable to monitor only communication incoming from the communication network **37,** and disregard some, or all, of the outgoing communication. The specific protocol implementation **34** thus interacts only with messages and/or data/content that comply with its specification, such that its proper functioning and operation cannot be jeopardized by aberrant/malformed communication that is blocked by the SPE **33.**

This scheme **30** provides a secure network communication infrastructure allowing the certain device **35** to safely communicate over communication network **37** with other network entities **38a, 38b,..., 38c,** which may direct, intentionally or unintentionally, aberrant/malformed communication to the certain device **35.** Of course such other network entities may include other certain devices **35b** configured to communicate over the communication network **37** with, or without, secure communication layers **(36)** tailored for their specific needs.

In some possible embodiments the constructor **32** comprises a graphical user interface (GUI) unit **32g** (utilizing graphical editors and/or graphical application generators) configured and operable to guide the user **39** through various steps of the construction process (*e.g.,* in a wizard-like manner and/or using a graphical object representation scheme). More specifically, the GUI unit **32g** is configured and operable to present (*e.g.,* in a display device, such as monitor - not shown in the figures) to the user **39** various options required for the construction process, receive user selections and/or inputs via the input unit **32i,** and output data indicative thereof to the protocol abstraction unit **32s.**

In some embodiments the constructor **32** comprises a definitions repository unit **2** comprising pre-defined definition building blocks for the protocol specification stage. In some embodiments the pre-defined definition building blocks are adapted to simplify the settings of protocol specification definitions, and comprise predefined definitions such as, but not limited to, permissible value types, allowed message fields, allowed message types, and suchlike. In some embodiments the pre-defined definition building blocks are adapted to provide some standard sample protocols that can be used by the user as a template for the definition of the communication protocol specification. The definitions repository unit **2** further comprises, in some embodiments, definitions for simplifying the settings of communication types, communication layers, and/or communication channels. In addition, the definitions repository unit **2** can also comprise similar definitions for simplifying the settings of system behavior, system configuration, the SPE configuration, and suchlike. The GUI unit **32g** is thus configured and operable in some embodiments to allow the user to add, remove, or modify the pre-defined definition building blocks provided in the definitions repository unit **2.**

The protocol abstraction unit **32s** utilizes the protocol definition of messages, their content, structure, and rules, as devised by means of the GUI unit **32g** to generate a communication protocol model for the specific protocol implementation **34** of the certain device **35.** In some embodiments the communication model comprises the specifics of a protocol definition, such as, but not limited to, allowed message structure, allowed message content, and logical rules including states for a stateful protocol. The protocol model may further specify transport layer information, system specific rules, deployment specific rules, and suchlike.

The validator unit **32v** receives the protocol model generated by the protocol abstraction unit **32s** and performs a logical consistency validation. The code generation unit **32p** then uses the validated communication protocol model, which is typically a very complex abstract model, to generate a standard computer programming language code implementing the SPE **33.** For example, and without being limiting, the source-code generated by the code generation unit **32p** can be compiled into a working library/DLL and/or application that does the actual protocol monitoring, filtering and enforcement.

In some embodiments, incoming protocol messages monitored by the SPE **33** must conform to the communication model, in order to pass through to the specific protocol implementation **34.** As described hereinabove, the protocol model provides a complete description of a complex communication model describing what messages and what content are allowed at which stage and state. It is noted that there is a high degree of inter-dependency within the data of the communication protocol model, which the simple table approach fails to capture and thus cannot be used. In possible embodiments, any non-conforming message can be logged, blocked, and/or reported. Further analysis of such reports may reveal patterns and attack methodologies.

Thus, in some embodiments the SPE **33** carries out the message processing and validation against the communication model generated by the protocol abstraction unit **32s,** and any message not conforming to the generated protocol model and rules is determined to be dangerous, and may possibly be blocked.

The GUI unit **32g** is preferably configured and operable to implement a protocol definition stage for defining types of messages, their structure, their expected content, their internal field-content dependencies, their timing and sending/receiving order. It is noted that files and information streams (such as video or audio) also have structure, fields, types, and suchlike, and thus these other communication forms can be considered special cases of a communication protocol. Part of the protocol definitions can extend beyond the messages to include stream parsing rules (for finding and extracting messages from the stream).

For example, and without being limiting, the GUI unit **32g** may be configured to receive via the input unit **32i** data indicative of a set of characterizing definition and/or rules defined by the user **39** for the protocol specification of the specific communication protocol **(34).** The data received from the user **39** may also comprise information about the specific device **35,** such as but not limited to, the type of device (*e.g.,* computer periphery devices, electrical appliance devices, industrial devices, and suchlike) types of data and/or instructions to be communicated with the certain device **35,** and/or types and timings of communication sessions it requires.

Additionally or alternatively, the GUI unit **32g** may be configured and operable to present to the user **39** predefined selection lists, which may be fetched from the definitions repository unit **2,** allowing graphical selection (*e.g.,* by a pointing device such as a mouse) of the definitions and characterizing features required for the protocol specification definition. For example, and without being limiting, the GUI unit **32g** may present to the user **39** a list of specific devices (or systems or computer applications) **D1** for which a secure communication layer **36** is to be constructed, a list of data-links/network transport types **D4** (*e.g.,* serial connection, dedicated I/O, TCP/IP data network, optical transport network, etc.), a list of applicable protocols **D2** suitable for the devices **D1** to communicate data over the networks **D4,** and lists of definitions **D3** for defining behavioral profile (rules) for the protocols **D2.**

The GUI unit **32g** is configured in some embodiments to selectively present the various options available for the user's selection based on previous selection and/or data inputs received from the user **39.** For example, and without being limiting, if the user selected/specified the type of the certain device **35** for which the protection layer is being constructed, then the GUI unit **32g** may restrict the lists of protocols **D2** presented to the user for selection to protocols that are more suitable for use with the selected/specified device type. Similarly, the GUI unit **32g** may restrict the lists of data-link/network transport types **D4** and/or lists of definitions **D3** presented to the user for selection to more suitable data-link/networks transport types and/or protocol definitions based on the type of device selected/specified by the user. Likewise, after the user selects/specifies the type of data-link/network transport type **D4** to be used, the GUI unit **32g** may restrict the lists of protocols **D2** and/or protocol definitions **D3** presented to the user for selection to protocols and/or definitions that are more suitable for use with the selected/specified data-link/network transport type.

Optionally, and in some embodiments preferably, the GUI unit **32g** is configured and operable to provide to the user object-oriented-like abstraction of the protocol specification definitions. The data obtained by the GUI unit **32g** is then used by the protocol abstraction unit **32s** to generate the protocol model, whose coherency and consistency are then validated by the validator unit **32v.** This process thereby enables formulating an abstract communication model which can be effectively used to generate substantially robust and secure communication layer **36.**

The validated protocol model is used by the code generator unit **32p** for generating the SPE **33** adapted for the communication needs of the certain device **35.** The protocol abstraction unit **32s** may use the data obtained by the GUI unit **32g** (and/or the rules/protocol specification received from the user) to derive an enforceable protocol model of allowed messages (data/instructions packages), data types, message orders and/or timings, for use by the SPE **33.**

It is noted that the secure communication layer construction schemes described herein allows almost any user (not requiring programming skills or extensive knowledge in communication systems) to construct a communication protocol filter/enforcer designed and tailored for the needs of a certain specific device or application. The constructor is thus designed to enable generation of substantially simplified and robust implementation of a dedicated protocol protection layer **33** tailored to guarantee that the specific protocol implementation **34** used by the certain device **35** interact only with permissible communication traffic. Accordingly, although in some embodiments the specific protocol implementation used by the certain device **35** may be simplified and vulnerable *per se,* the respective dedicated protection layer **36** constructed for each specific protocol implementation is specifically configured to disable exploitation of these vulnerabilities by opponents.

Thus, **SPE 33** constructed according to possible embodiments of the present invention, in many cases will be substantially compact and efficient in terms of memory and processing resources required for its operation. Specifically, as the SPE **33** is tailored to service the certain application/device **35** it will be implemented to provide just the services and functionality required for the correct and designed operation of the certain application/device. Likewise, as the dedicated SPE is specifically tailored to filter the communication traffic handled by the specific protocol implementation, it will also be substantially smaller/lighter and faster to execute/operate than conventional of-the-shelf commercially available IDPSs.

It is noted that communication layer constructor **32** can be implemented either by hardware or software, or by any combination of hardware and software. For example, a computerized system **27** having one or more processing units and memories may be used for storing and executing software code configured and operable to implement the GUI unit **32g,** protocol specification unit **32s,** the protocol abstraction unit **32s,** the code generator **32p,** and the validator unit **32v.** **Fig. 3** exemplifies the definitions repository unit **2** being external to the computerized system **27** (*e.g.,* held in a separate storage/memory), but in some possible embodiments it may be similarly stored in one of the memories of the computerized system **27.**

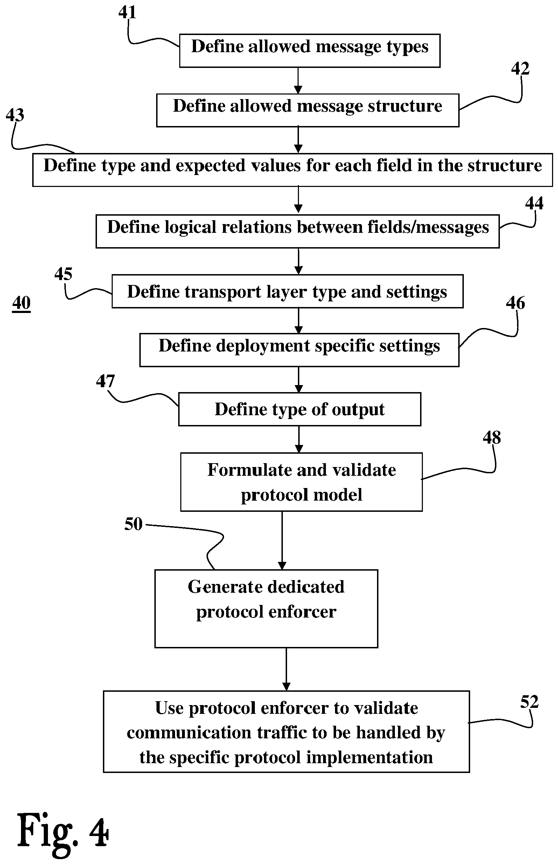

**Fig. 4** is a flow chart **40** exemplifying a possible process of constructing a secure network communication scheme (*e.g.,* **30** in **Fig. 3**), according to some possible embodiments. The process starts in step **41,** in which the user defines (or reuses) types of allowed protocol messages, and thereafter, in step **42,** the user defines allowed message structure for each of the allowed messages.

Next, in step **43,** the user defines expected values for each field in the allowed message structures. In step **44** the user defines logical relations between fields (if needed) and between allowed messages (*e.g.,* request-response pairing). In step **45** transport layer types and settings are defined by the user, and in step **46** the user defines deployment of specific settings, such as but not limited to, logging and reporting settings, blocking and reporting, or just reporting, and suchlike. In the optional step **47** the user defines output types for the construction process *e.g.*, specific computer language for the code generation, for software library or application, for hardware description language, or suchlike.

In step **48** the different data and selections received from the user in steps **41** to **47** are used to generated, and optionally validate consistency and coherency of, the communication protocol model. In possible embodiments the protocol model validation step is adapted to identify issues/deficiencies in the protocol definition which may cause problems in the deployment and/or operation of the SPE. In step **50** a dedicated protocol enforcer **(33)** is generated based on the generated communication protocol model. In some embodiments step **50** involves transforming the abstract protocol model into computer programming language (and/or hardware description language), so as to obtain an SPE component in the form of source-code.

In some possible embodiments the SPE source-code is compiled to produce a software-library that can be linked into another software. Alternatively, the SPE source-code is compiled to produce an operating-system driver configured and operable to handle communication at the OS level without changing the application. Optionally, the SPE source-code is compiled to produce an application to be deployed separately from the system (*e.g.,* on a dedicated hardware to be installed on the communication line, in-line with the protected system).

Finally, in step **52,** the generated SPE **(33)** is installed in the certain application/device **(35)** and used to validate communicate traffic exchanged with the certain device over the communication network **(37).**

No particular order is required for carrying out steps **41** to **47** in the construction process **40** described above with reference to **Fig. 4****,** except for those steps logically requiring the results of prior actions. Accordingly, while the actions of these steps are described as being performed in a general order, the order is exemplary only and can be altered. It is noted that each such one of steps **41** to **47** is used to define one aspect of a complex communication model description, and thus there may be interconnections between these steps, possible multiple iterations of certain steps (not shown in **Fig. 4**), in order to properly complete the model description and definition.

Alternatively, the user may choose to start the protocol specification process using a pre-defined protocol or protocol template, and to modify certain aspects and definitions of the pre-defined protocol/template to derive a related protocol specification and communication protocol model. This is especially applicable for defining proprietary extensions to standard protocols by creating a new extended version of an older protocol, and/or use a pre-defined protocol on a new system having different settings unrelated to the strict protocol definition (*e.g.,* having/supporting a different transport-layer, specific deployment settings, or suchlike).

It is noted that the construction processes described herein provide for a protocol definition stage that is substantially quick, easy, user friendly, simplified and robust. In addition, these construction processes are usable for almost any machine-to-machine (M2M) communication interface.

The secure communication schemes described herein may be regarded as defensive solutions for the protection of varied systems and devices (and/or applications), against attacks or penetration attempts at the communication protocols level. This defensive approach can easily be fitted to industrial systems, embedded systems, including currently deployed (*i.e.,* in operational use) systems, with no need to upgrade or modify the system/application itself.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system". Furthermore, aspects of the present invention may take the form of a computer program product embodied in one or more computer readable medium(s) having computer readable program code embodied thereon.

For example, computer programs (*e.g.,* computer control logic) may be loaded from a secondary memory into a main memory for execution by one or more processors of the control system. Alternatively or additionally, computer programs may be received via a communication interface. Such computer programs, when executed, enable the computer system to perform certain features of the present invention as discussed herein. In particular, the computer programs, when executed, enable a control processor to perform and/or cause the performance of features of the present invention. Accordingly, such computer programs may implement controllers of the computer system.

In an embodiment where the invention is implemented using software, the software can be stored in a computer program product (*e.g.,* magnetic media such as diskette, tape or fixed disk, or optical media such as a CD-ROM) and loaded into the computer system using the removable storage drive, the memory chips or the communications interface. Additionally, the software can be supplied via the Internet or some type of private data network. The control logic (software), when executed by a control processor, causes the control processor to perform certain functions of the invention as described herein.

In another embodiment, features of the invention are implemented primarily in hardware using, for example, hardware components such as application specific integrated circuits (ASICs) or field-programmable gated arrays (FPGAs). Implementation of the hardware state machine so as to perform the functions described herein will be apparent to persons skilled in the relevant art(s). In yet another embodiment, features of the invention can be implemented using a combination of both hardware and software.

As described hereinabove and shown in the associated Figs., the present invention provides methods and system for constructing smart protocol enforcing components for certain applications/devices. While particular embodiments of the invention have been described, it will be understood, however, that the invention is not limited thereto, since modifications may be made by those skilled in the art, particularly in light of the foregoing teachings. As will be appreciated by the skilled person, the invention can be carried out in a great variety of ways, employing more than one technique from those described above, all without exceeding the scope of the invention.

## Claims

1. A computer program product comprising a computer-readable medium, wherein the computer-readable medium retaining instructions, which instructions, when executed by a processor, cause the processor to perform the steps of:
receiving a sequence comprising at least one message exchanged with a device over a communication network;
determining whether the sequence complies with a communication model;
subject to the sequence not complying with the communication model, replacing a value in the at least one message, thereby transforming the sequence into a second sequence compliant with the communication model; and
providing to the device the second sequence instead of the first sequence;
wherein the communication model is constructed upon user input, the user input comprising for each of at least a first message and a second message allowed to be received by the device: a message type selected from at least a first message type and a second message type, and a message structure.

2. A method comprising:
receiving user input describing a communication model comprising messages allowed to be received by a device, wherein the user input comprising for each of at least a first message and a second message allowed to be received by the device: a message type selected from at least a first message type and a second message type, and a message structure;
generating the communication model based on the user input;
performing a logical consistency validation of the communication model; and
generating a computer code implementing a protocol enforcer for enforcing the communication model, wherein the communication model comprises a rule for replacing a value in at least one message, thereby transforming a sequence of messages received by the device into a second sequence of messages compliant with the communication model, wherein said protocol enforcer is configured to apply the rule, whereby providing the second sequence to the device instead of the sequence.

3. An apparatus having a processor, the processor being adapted to perform the steps of:
receiving a sequence comprising at least one message exchanged with a device over a communication network;
determining whether the sequence complies with a communication model;
subject to the sequence not complying with the communication model, replacing a value in the at least one message, thereby transforming the sequence into a second sequence compliant with the communication model; and
providing the second sequence to the device instead of the first sequence;
wherein the communication model is constructed upon user input, the user input comprising for each of at least a first message and a second message allowed to be received by the device: a message type selected from at least a first message type and a second message type, and message structure.

4. The computer program product of Claim 1, the method of Claim 2 or the computerized apparatus of Claim 3, wherein the first message type is compliant with a first protocol and the second message type is compliant with a second protocol, wherein the first protocol is different from the second protocol.

5. The computer program product of Claim 4, wherein the second protocol is an enhancement of the first protocol.

6. The method of Claim 4, wherein the second protocol is an enhancement of the first protocol.

7. The apparatus of Claim 4, wherein the second protocol is an enhancement of the first protocol.

8. The computer program product of Claim 1, the method of Claim 2 or the computerized apparatus of Claim 3, wherein the user input comprises a logical relationship required to exist between fields within the first message, and wherein the sequence is indicated as invalid if the sequence comprises the first message for which the logical relationship does not exist.

9. The computer program product of Claim 1, the method of Claim 2 or the computerized apparatus of Claim 3, wherein the user input comprises a logical relationship required to exist between at least the first message and the second message, and wherein the sequence is indicated as invalid if the sequence comprises the first message and the second message for which the logical relationship does not exist.

10. The computer program product of Claim 1, the method of Claim 2 or the computerized apparatus of Claim 3, wherein the user input further comprises at least one item selected from the group consisting of: a type for a field in the message structure; and at least one expected value for a field in the message structures; allowed transport layer types; settings of allowed transport layer types; deployment specific settings; and type of allowed platform for validating the sequence.

11. The computer program product of Claim 1 or the apparatus of Claim 3, wherein the value is replaced in accordance with a rule, wherein the communication model comprises the rule.
